# EUROPEAN PATENT APPLICATION

(11) **EP 0 800 986 A2**
(43) Date of publication of application: **15.10.1997**
(21) Application number: 97104506.7
(22) Date of filing: 17.03.1997
(51) Int. Cl.: B62K 21/22

(54) **Adjustable steering head for motorcycle**

(30) Priority: 12.04.1996 IT MI960714
(71) Applicant: Ducati Motorcycles S.p.A., 40132 Bologna (IT)
(72) Inventor: Cracchi, Claudio, Anzola Dell'Emilia, Bologna (IT)
(74) Representative: Luksch, Giorgio, Dr.-Ing.

(57) **Abstract**

A device for modifying the fore-travel of a motorcycle by varying the advancement of the steering axis (X) of the vehicle, which comprises a frame (1A) having a steering tube (1) in which there is movably positioned a steering unit (3) connected to a support member for the vehicle front wheel and comprising a first eccentric tubular member (7) inserted into a second eccentric tubular member (13), the axis (X) of the first member (7), defining the steering axis, being adjustable eccentric to the axis (Z) of the second member (13), this latter being adjustable eccentric to the axis of the steering tube so as to bring the steering axis into the longitudinal plane of the vehicle. This is achieved by centering means (35) enabling the relative position between said axes (X, Y) and the position relative to said plane to be varied.

## Description

This invention relates to a device for modifying the fore-travel of a motorcycle by varying the advancement of the vehicle steering axis in accordance with the introduction to the main claim.

The known purpose of modifying the fore-travel of a motorcycle front wheel is to vary the vehicle driving characteristics on the basis of the characteristics of the driver or, in the case of motorcycles used in competitions, the characteristics of the circuit on which such vehicles are used. One means for modifying the fore-travel is to vary the inclination of the steering axis.

Various devices are known for varying the geometry of the steering axis. The most common comprise eccentric bushes positioned at the opposite ends of a tubular element acting as the steering pin or at the steering head and base connected to this pin. By substituting these bushes the inclination of the steering pin within the tube in which it is located is modified, hence varying the inclination of the steering axis. The fore-travel is consequently also varied.

With the aforesaid known solution, modifying the fore-travel is a lengthy operation which is not easy to carry out. In addition, precise (or fine) adjustment of the steering axis inclination is not always achievable. Moreover, because of the lengthy time required to replace the bushes, the aforesaid solution is unsuitable for use on a circuit or track during a competition trial or during the competition itself, where it is very important that any work on the motorcycle is accomplished within a short time.

Other known solutions involve the replacement of the entire steering unit (steering pin, steering head and base). Such solutions however suffer from the same aforesaid problems.

A further known solution involves adjusting the steering axis inclination by a screw acting on the steering pin. However with this solution, the maintenance of the originally effected adjustment for a relatively long time cannot be assured because of vibration and possible small relative movements to which the parts of the steering unit are subjected during vehicle use.

An object of the present invention is to provide an improved device for adjusting the fore-travel of the motorcycle front wheel by varying the advancement of the steering axis.

A particular object of the invention is to provide a device of the stated type which is simple, easy to use, enables the advancement of the steering axis to be quickly varied, and can be used universally on several motorcycle models.

A further object is to provide a device of the stated type which allows continuous adjustment of said advancement and hence of the fore-travel.

A further object is to provide a device of the stated type which provides said adjustment while maintaining the steering axis inclination constant.

These and further objects which will be apparent to the expert of the art are attained by a device in accordance with the accompanying claims.

The present invention will be more apparent from the accompanying drawing, which is provided by way of non-limiting example and in which:
Figure 1 is a cross-section through a front part of a motorcycle in which the device of the invention can be seen;
Figure 2 shows an element of the device of the invention which is not associated with the motorcycle; and
Figure 3 is a view from above of the motorcycle front part of Figure 1, from which certain parts have been omitted for greater clarity.

With reference to said figures, a motorcycle comprises a tube 1, fixed to the vehicle frame 1A, relative to which a steering unit 2 can rotate about its axis X. This latter unit comprises a portion 3 internal (mostly) to the tube 1, a steering head 4 (provided with its own clamping screw 28) and a steering base 5 with which there are associated usual forks (not shown) or a similar member for supporting and guiding the vehicle front wheel. More specifically, the portion 3 comprises a steering pin 7, internally hollow at 8 and having its hollow ends 7A and 7B internally threaded. The end 7A cooperates with a screw 10 (or equivalent fixing member) for fixing the unit 3 to the steering head 4, and the end 7B cooperates with a screw 12 (or equivalent fixing member) for fixing the steering base 5 to the unit 3.

This latter comprises, in addition to the pin 7, a member 13 hollow at 14, in the cavity of which said pin is located.

The cavity of said member 13 is formed eccentrically therein and therefore has an axis Z which is eccentric to the geometrical axis (not shown) of the member 13. Likewise the axis of the ends 7A and 7B is eccentric to the geometrical axis (not shown) of the outer surface of the pin 7.

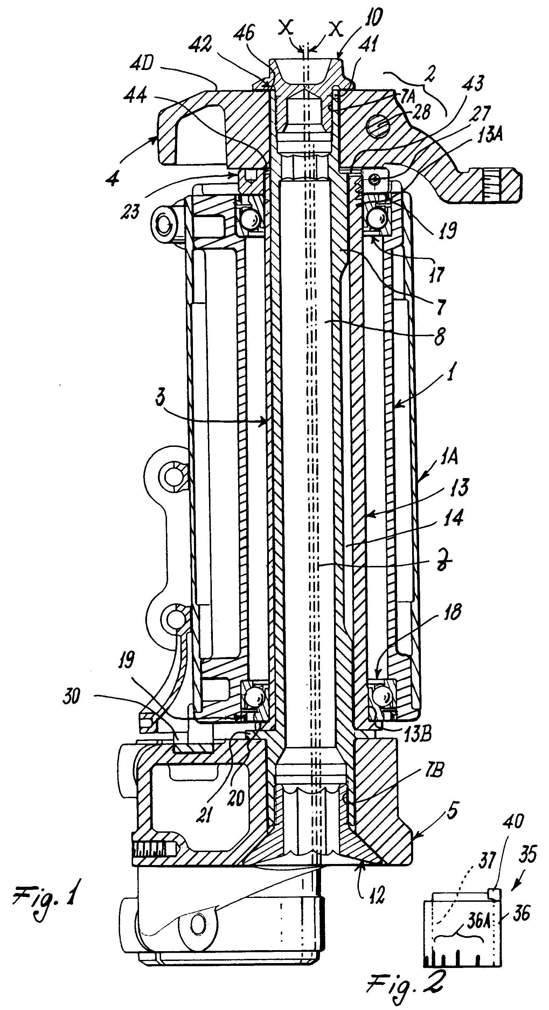

The member 13 cooperates with bearings 17 and 18 positioned in proximity to the opposite ends 13A and 13B (upper and lower in Figure 1) of said member, between this latter and the tube. Usual dust protection rings 19 are interposed between said bearings and the tube 1. These bearings allow the unit 3 to rotate within the tube so as to enable the vehicle to be driven. The lower end 13B of the member 13 has a flange 20 which is interposed between the bearing 18 and a collar 21 on the pin 7 interposed between the flange 20 and the steering base 5.

The upper end 13A of the member 13 is threaded externally to cooperate with a ring nut 23 which presses onto the bearing 17. With the ring nut 23 tightened on the member 13, after tightening a screw 27 of the ring nut, and with screws 10 and 12 tightened into the corresponding ends 7A and 7B of the pin 7, the steering unit 3 behaves as one piece, with any relative rotation between its various parts being prevented. At the same time the rotary action on the unit 3 (via a usual handlebar, not shown) for steering the front wheel is transferred directly and with precision to the wheel. The extent of steering of this latter, in particular, is limited in known manner by a limit stop 30 associated with the steering base 5.

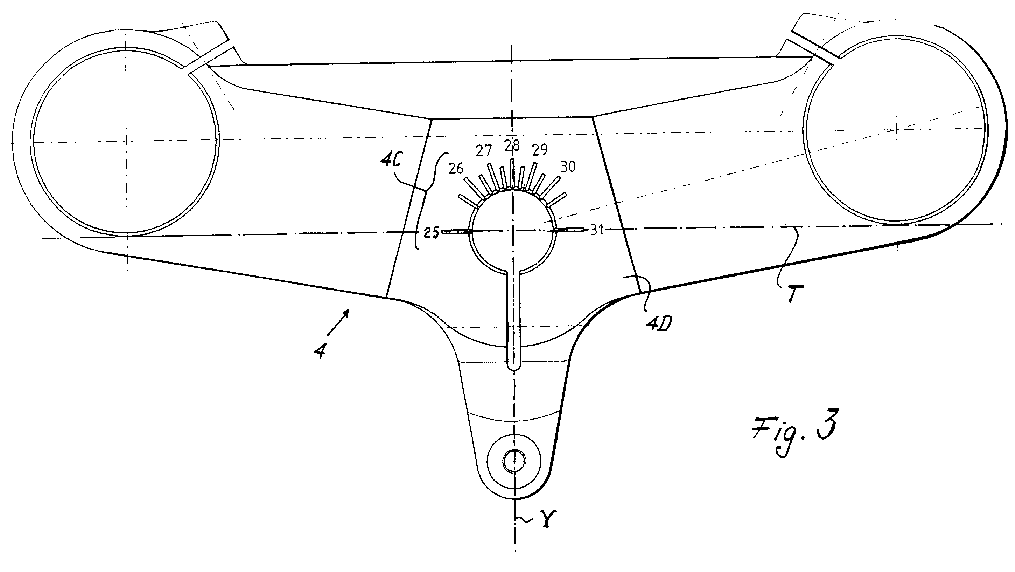

The device of the invention therefore comprises two elements (the pin 7 and the member 13) which, by virtue of their eccentric formation, allow the advancement of the steering axis to be easily modified along a vertical plane defining the longitudinal plane Y (see Figure 3) of the motorcycle. It will now be assumed that this advancement is to be modified in order to vary the fore-travel of the vehicle front wheel.

To achieve this, in one embodiment of the invention a gauging element 35 shown in Figure 2 is used. This element has a cylindrical body 36, which is internally hollow (at 37) to enable it to be mounted on the upper end 7A of the pin 7 and is graduated externally at 36A. The body 36 comprises a projecting tooth 40 to be inserted into a corresponding notch 41 provided in the end part 42 of the pin 7.

Another positioning notch 43 is provided in an end portion 44 of the member 13. A further positioning notch 46 is provided in the part 42.

To use the device of the invention, the steering head 4 is initially separated from the pin 7 while maintaining the ring nut 23 tightened on the member 13. The screw 12 is slackened.

The gauging (and adjusting) element 35 is then mounted on the end 7A of the pin 7 and the tooth 40 inserted into the notch 41. With a usual tool (for example a compass wrench, not shown) the ring nut 23 (rigid with the member 13) is operated by rotating it about its axis while maintaining the pin 7 at rest by a usual tool (not shown) inserted into its end 7A. In this manner, with the rotation of the ring nut 23 the member 13 rotates about the pin 7; this rotation is continued until the notch 43 of said member is brought into correspondence with a precise chosen graduated notch 36A in the body 36 of the element 35. This notch corresponds to a known value of advancement of the steering axis X, which for the moment lies in a plane parallel to a vertical plane passing through the tube 1 and coinciding with said plane Y. It should be noted that the term "advancement" signifies any positive or negative change in the position of the axis X in the plane Y parallel to itself, this resulting in a variation (positive or negative) in the fore-travel. This is achieved without there being any variation in the inclination of said axis.

Having done this, the element 35 is removed from the end 7A and the head 4 is remounted on the pin 7. The unit 3 is then rotated such that its notch 46 becomes positioned at a notch of a graduated part 4C present on an upper face 4D of the head 4 (see Figure 3). With this rotation (which results in a movement of the axis Z of the member 13 along a plane T perpendicular to the plane Y and hence a movement of the pin 7 in this direction), the axis X of the steering pin is reliably shifted into the plane Y (which usually is not the case after the aforedescribed movement of the member 13). The reason for this is to achieve normal "drivability" of the vehicle.

Following this operation the screw 12 is tightened. Preferably, in addition, to verify that the pin 7 and member 13 have remained in phase with each other, the steering head 4 is again removed, the element 35 is mounted on the pin in the already described manner, and a check is made to determine that the previously chosen fore-travel value (indicated on the graduated part 36A of the element 35) still lies in correspondence with the notch 43 of the member 13.

The head is then mounted and the screws 10 and 28 finally tightened.

The aforedescribed operation requires only a short time and is of easy implementation.

One embodiment of the invention has been described. Others are however possible. For example, the gauging element 35 can be replaced by externally graduating the end 7A of the pin 7. Other embodiments of the invention are also to be considered as falling within the scope of the present document.

## Claims

1. A device for modifying the fore-travel of a motorcycle by varying the advancement of the vehicle steering axis (X), said vehicle comprising a frame (1A) with which a steering tube (1) is rigid, in this latter there being movably positioned a steering unit (3) rigid upperly with a steering head (4), and lowerly with a steering base (5) connected to a support member for the vehicle front wheel, characterised in that the steering unit (3) comprises first eccentric means (7) inserted into second eccentric means (13) and having their longitudinal axis coinciding with the steering axis (X), the relative position of said eccentric means (7, 13) being able to be initially modified for the purpose of achieving the required advancement value of the steering axis (X) and then maintained during a subsequent movement of both said means (7, 13) within the tube (1) such as to ensure that said axis (X) lies within the longitudinal plane (Y) of the vehicle.

2. A device as claimed in claim 1, characterised by comprising centering means (35) to enable the variation in the relative position of the eccentric means (7, 13) and in the position of both relative to the steering head (4) to be achieved.

3. A device as claimed in claim 1, characterised in that the eccentric means are tubular members (7, 13) comprising eccentric cavities (8, 14), within the cavity (14) of that (13) of said members which defines the second eccentric means there being located the other member (7), which acts as the steering pin.

4. A device as claimed in claim 3, characterised in that the steering pin (7) directly supports the steering head (4) and the steering base (5).

5. A device as claimed in claims 2 and 3, characterised in that the member (13) containing the steering pin (7) has an end part (44) provided with at least one reference element (43) arranged to cooperate with the centering means (35) to obtain the relative movement between said member (13) and the steering pin (7) so as to achieve the desired advancement value of the steering axis (X).

6. A device as claimed in claim 5, characterised in that the reference element (43) is a notch.

7. A device as claimed in claim 2 or 5, characterised in that the centering means are a tubular element to be arranged on one end (7A) of the steering pin and comprising a body (36) externally provided with a graduated scale (36A) corresponding to various possible advancement values of the steering axis, said body (36) having an element (40) arranged to cooperate with a counter-element (41) of said end (7A) to ensure unique positioning of said body on the pin (7).

8. A device as claimed in claim 2 or 5, characterised in that the centering means (35) are an externally graduated end portion (7A) of the steering pin (7).

9. A device as claimed in claim 3, characterised in that the steering pin (7) comprises a reference element (46) arranged to cooperate with a graduated scale (4C) on the steering head (4) to enable the position of the steering axis (X) in the longitudinal plane (Y) of the vehicle to be adjusted.

10. A device as claimed in claim 3, characterised in that the member (13) eccentrically containing the steering pin (7) cooperates with a ring nut (23) acting on a bearing (17) interposed between said member (13) and the sleeve (1), said ring nut enabling said member (13) to be directly moved within the tube.

11. A device as claimed in claim 3, characterised in that the member (13) eccentrically containing the steering pin (7) comprises a flanged end (13B) cooperating with a respective bearing (18) interposed between said member and the tube (1), the flange (20) of said end being interposed between said bearing and a collar (21) of the steering pin (7), this latter being positioned between the steering base (5) and the steering head (4) to which the pin is connected by a fixing member (12).
